# EUROPEAN PATENT APPLICATION

(11) **EP 4 296 391 A1**
(43) Date of publication of application: **27.12.2023**
(21) Application number: 23155029.4
(22) Date of filing: 06.02.2023
(51) Int. Cl.: C22C 30/00

(54) **REFRACTORY COMPLEX CONCENTRATED ALLOYS FOR IMPROVED OXIDATION RESISTANCE AND STRUCTURAL STABILITY**

(30) Priority: 24.06.2022 US 202217808629
(71) Applicant: The Boeing Company, Arlington, VA 22202 (US); Missouri University of Science and Technology, Rolla, MO 65409 (US)
(72) Inventor: Mann, Austin E., Arlington, 22202 (US); Yousefiani, Ali, Arlington, 22202 (US); Newkirk, Joseph, Rolla, 65409 (US)
(74) Representative: Witte, Weller & Partner Patentanwälte mbB

(57) **Abstract**

A refractory complex concentrated alloy includes about 12-22 wt.% chromium (Cr), about 22-35 wt.% molybdenum (Mo), about 15-50 wt.% tantalum (Ta), about 10-20 wt.% titanium (Ti), and aluminum (Al). The refractory complex concentrated alloy is characterized by a matrix phase having a body-centered cubic crystal structure.

## Description

### BACKGROUND

Aerospace components are commonly manufactured from aluminum and titanium based steels for their advantageous material properties. Current materials used in the aerospace industry face challenges with respect to long-term durability in extreme environments.

For service reliability, materials need to exhibit a certain level of environmental resistance, oxidation or otherwise, as well as structural stability. However, few material solutions exist to address this challenge of material performance in the combined conditions of temperature, atmosphere, mechanical stress, and working fluid interaction, as are applicable to extreme environment heat exchangers.

Accordingly, those skilled in the art continue with research and development efforts in the field of advanced materials for manufacturing aerospace components.

### SUMMARY

Disclosed are refractory complex concentrated alloys.

In an example, the refractory complex concentrated alloy includes about 12-22 wt.% chromium (Cr), about 22-35 wt.% molybdenum (Mo), about 15-50 wt.% tantalum (Ta), about 10-20 wt.% titanium (Ti), and aluminum (Al). The refractory complex concentrated alloy is characterized by a matrix phase having a body-centered cubic crystal structure.

Also disclosed are methods for manufacturing a component of an aircraft, the component comprising a refractory complex concentrated alloy comprising about 12-22 wt.% chromium (Cr), about 22-35 wt.% molybdenum (Mo), about 15-50 wt.% tantalum (Ta), about 10-20 wt.% titanium (Ti), and aluminum (Al). The refractory complex concentrated alloy is characterized by a matrix phase having a body-centered cubic crystal structure.

In an example, the method includes forming the component comprising the refractory complex concentrated alloy by one of arc melting or powder consolidation.

Other examples of the disclosed refractory complex concentrated alloys and methods will become apparent from the following detailed description, the accompanying drawings, and the appended claims.

### BRIEF DESCRIPTION OF THE DRAWINGS

FIG. 1A is an x-ray diffraction pattern of annealed AlCrMoTaTi, Al_{0.75}CrMoTaTi, and AlCrMoTa_{0.75}Ti alloys;
FIG. 1B is an x-ray diffraction pattern of annealed Al_{0.25}Cr_{1.32}Mo_{1.32}Ta_{0.8}Ti_{1.32}, Al_{0.75}Cr_{1.27}Mo_{1.27}Ta_{0.45}Ti_{1.27}, and Al_{0.75}Cr_{1.15}Mo_{1.15}Ta_{0.8}Ti_{1.15} alloys;
FIG. 2 is a thermogram for various refractory complex concentrated alloys;
FIG. 3 is a phase diagram of an Al_{0.75}Cr_{1.27}Mo_{1.27}Ta_{0.45}Ti_{1.27}alloy;
FIG. 4 is a phase diagram of an Al_{0.25}Cr_{1.32}Mo_{1.32}Ta_{0.8}Ti_{1.32} alloy;
FIG. 5 is a phase diagram of an AlCrMoTaTi alloy;
FIG. 6 is a phase diagram of an Al_{0.75}Cr_{1.15}Mo_{1.15}Ta_{0.8}Ti_{1.15} alloy;
FIG. 7 is a phase diagram of an Al_{0.75}CrMoTaTi alloy;
FIG. 8 is a phase diagram of an AlCrMoTa_{0.75}Ti alloy;
FIG. 9 is an isopleth of an AlₓCrMoTaTi alloy at 1000 °C;
FIG. 10 is an isopleth of an AlCrMoTa_{y}Ti alloy at 1000 °C;
FIG. 11 is a flow diagram of a method for manufacturing a component of an aircraft;
FIG. 12 is a flow diagram of an aircraft manufacturing and service methodology; and
FIG. 13 is a schematic block diagram of an example of an aircraft.

### DETAILED DESCRIPTION

The following detailed description refers to the accompanying drawings, which illustrate specific examples described by the present disclosure. Other examples having different structures and operations do not depart from the scope of the present disclosure. Like reference numerals may refer to the same feature, element, or component in the different drawings.

Illustrative, non-exhaustive examples, which may be, but are not necessarily, claimed, of the subject matter according to the present disclosure are provided below. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

Disclosed is a refractory complex concentrated alloy 100. The refractory complex concentrated alloy 100 may be characterized by various compositions and material and mechanical properties required for the intended end use. In one example, the refractory complex concentrated alloy 100 is characterized by a matrix phase having a body-centered cubic crystal structure. In one or more example, the body-centered cubic crystal structure of the matrix phase is achieved upon the refractory complex concentrated alloy being subjected to a temperature of about 1000 °C to about 1500 °C.

The refractory complex concentrated alloy 100 may be defined by a range of alloy compositions notionally suited for improved oxidation resistance and structural stability for performance of metallic components in extreme aerospace environments. The compositions disclosed herein can be fundamentally categorized as high entropy alloys or complex concentrated alloys, depending on the level of entropy and contributions from specific elements. The primary examples posed in this disclosure will be of refractory complex concentrated alloys 100 that exhibit single phase stability at high temperatures, and exhibit exceptional oxidation resistance. This disclosure is applicable to development of novel metallic materials for advanced heat exchangers.

In one example, the refractory complex concentrated alloy 100 may be characterized as a variation of an AlCrMoTaTi alloy. In another example, the refractory complex concentrated alloy 100 may be characterized as one or more of Al_{0.75}CrMoTaTi, AlCrMoTa_{0.75}Ti, Al_{0.25}Cr_{1.32}Mo_{1.32}Ta_{0.8}Ti_{1.32}, Al_{0.75}Cr_{1.27}Mo_{1.27}Ta_{0.45}Ti_{1.27}, and Al_{0.75}Cr_{1.15}Mo_{1.15}Ta_{0.8}Ti_{1.15}.

In one example, refractory complex concentrated alloy 100 comprises about 12-22 wt.% chromium (Cr), about 22-35 wt.% molybdenum (Mo), about 15-50 wt.% tantalum (Ta), about 10-20 wt.% titanium (Ti), and aluminum (Al).

In another example, the refractory complex concentrated alloy 100 is characterized by a composition wherein the chromium (Cr) is present at about 13 wt.% to about 21 wt.%, the molybdenum (Mo) is present at about 24 wt.% to about 34 wt.%, the tantalum (Ta) is present at about 20 wt.% to about 45 wt.%, the titanium (Ti) is present at about 12 wt.% to about 19 wt.%, and the aluminum (Al) of is present at about 1 wt.% to about 10 wt.%.

In another example, the refractory complex concentrated alloy 100 is characterized by a composition wherein the chromium (Cr) is present at about 12 wt.% to about 16 wt.%, the molybdenum (Mo) is present at about 22 wt.% to about 27 wt.%, the tantalum (Ta) is present at about 40 wt.% to about 50 wt.%, the titanium (Ti) is present at about 10 wt.% to about 16 wt.%, and the aluminum (Al) is present at about 2 wt.% to about 8 wt.%.

In another example, the refractory complex concentrated alloy 100 is characterized by a composition wherein the refractory complex concentrated alloy 100 is characterized by a composition wherein the chromium (Cr) is present at about 12 wt.% to about 14 wt.%, the molybdenum (Mo) is present at about 23 wt.% to about 26 wt.%, the tantalum (Ta) is present at about 43 wt.% to about 47 wt.%, the titanium (Ti) is present at about 12 wt.% to about 14 wt.%, and the aluminum (Al) is present at about 3 wt.% to about 6 wt.%.

In another example, the refractory complex concentrated alloy 100 is characterized by a composition wherein the chromium (Cr) is present at about 12 wt.% to about 20 wt.%, the molybdenum (Mo) is present at about 24 wt.% to about 30 wt.%, the tantalum (Ta) is present at about 30 wt.% to about 40 wt.%, the titanium (Ti) is present at about 12 wt.% to about 18 wt.%, and the aluminum (Al) is present at about 4 wt.% to about 10 wt.%.

In another example, the refractory complex concentrated alloy 100 is characterized by a composition wherein the chromium (Cr) is present at about 13 wt.% to about 18 wt.%, the molybdenum (Mo) is present at about 25 wt.% to about 28 wt.%, the tantalum (Ta) is present at about 33 wt.% to about 38 wt.%, the titanium (Ti) is present at about 13 wt.% to about 17 wt.%, and the aluminum (Al) is present at about 6 wt.% to about 9 wt.%.

In another example, the refractory complex concentrated alloy 100 is characterized by a composition wherein the chromium (Cr) is present at about 13 wt.% to about 21 wt.%, the molybdenum (Mo) is present at about 25 wt.% to about 35 wt.%, the tantalum (Ta) is present at about 30 wt.% to about 40 wt.%, the titanium (Ti) is present at about 12 wt.% to about 18 wt.%, and the aluminum (Al) is present at about 1 wt.% to about 5 wt.%.

In another example, the refractory complex concentrated alloy 100 is characterized by a composition wherein the chromium (Cr) is present at about 14 wt.% to about 19 wt.%, the molybdenum (Mo) is present at about 27 wt.% to about 33 wt.%, the tantalum (Ta) is present at about 32 wt.% to about 38 wt.%, the titanium (Ti) is present at about 14 wt.% to about 18 wt.%, and the aluminum (Al) is present at about 1 wt.% to about 4 wt.%.

In another example, the refractory complex concentrated alloy 100 is characterized by a composition wherein the chromium (Cr) is present at about 15 wt.% to about 22 wt.%, the molybdenum (Mo) is present at about 28 wt.% to about 35 wt.%, the tantalum (Ta) is present at about 15 wt.% to about 26 wt.%, the titanium (Ti) is present at about 15 wt.% to about 20 wt.%, and the aluminum (Al) is present at about 2 wt.% to about 10 wt.%.

In another example, the refractory complex concentrated alloy 100 is characterized by a composition wherein the chromium (Cr) is present at about 18 wt.% to about 22 wt.%, the molybdenum (Mo) is present at about 30 wt.% to about 35 wt.%, the tantalum (Ta) is present at about 16 wt.% to about 25 wt.%, the titanium (Ti) is present at about 16 wt.% to about 20 wt.%, and the aluminum (Al) is present at about 3 wt.% to about 9 wt.%.

In another example, the refractory complex concentrated alloy 100 is characterized by a composition wherein the chromium (Cr) is present at about 14 wt.% to about 20 wt.%, the molybdenum (Mo) is present at about 24 wt.% to about 32 wt.%, the tantalum (Ta) is present at about 25 wt.% to about 45 wt.%, the titanium (Ti) is present at about 11 wt.% to about 19 wt.%, and the aluminum (Al) is present at about 2 wt.% to about 9 wt.%.

In another example, the refractory complex concentrated alloy 100 is characterized by a composition wherein the chromium (Cr) is present at about 15 wt.% to about 19 wt.%, the molybdenum (Mo) is present at about 25 wt.% to about 30 wt.%, the tantalum (Ta) is present at about 30 wt.% to about 35 wt.%, the titanium (Ti) is present at about 14 wt.% to about 18 wt.%, and the aluminum (Al) is present at about 3 wt.% to about 8 wt.%.

The refractory complex concentrated alloy 100 may be characterized by various material and mechanical properties resulting from the selected composition, mechanical processing of the refractory complex concentrated alloy 100, heat treating of the refractory complex concentrated alloy 100, and a combination thereof.

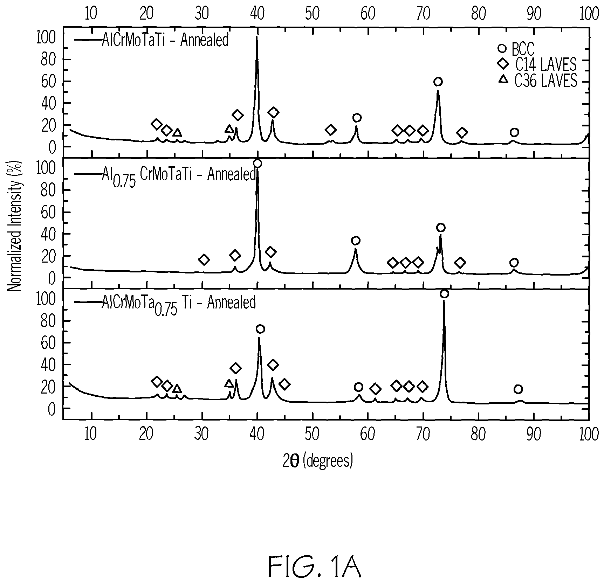

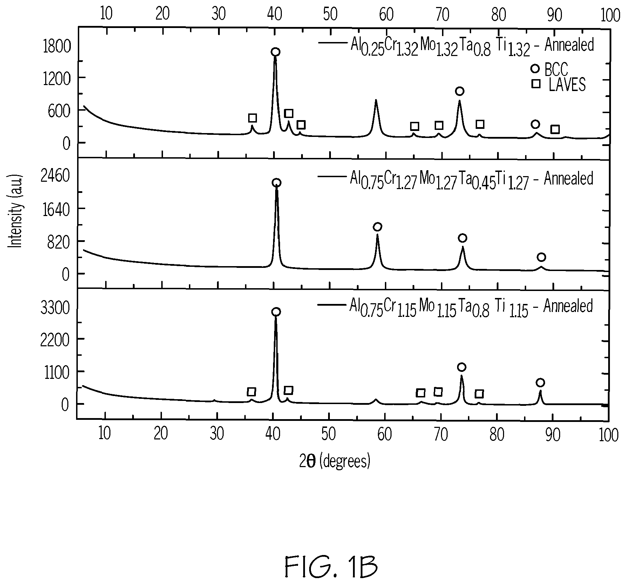

Detailed information about the crystallographic structure, chemical composition, and physical properties of the various composition of the refractory complex concentrated alloy 100 disclosed herein is illustrated in FIGs. 1A-1B. Specifically, FIG. 1A is an x-ray diffraction pattern of an AlCrMoTaTi alloy, an Al_{0.75}CrMoTaTi alloy, and an AlCrMoTa_{0.75}Ti alloy. FIG. 1B is an x-ray diffraction pattern of an Al_{0.25}Cr_{1.32}Mo_{1.32}Ta_{0.8}Ti_{1.32} alloy, an Al_{0.75}Cr_{1.27}Mo_{1.27}Ta_{0.45}Ti_{1.27}alloy, and an AI_{0.75}Cr_{1.15}Mo_{1.15}Ta_{0.8}Ti_{1.15} alloy.

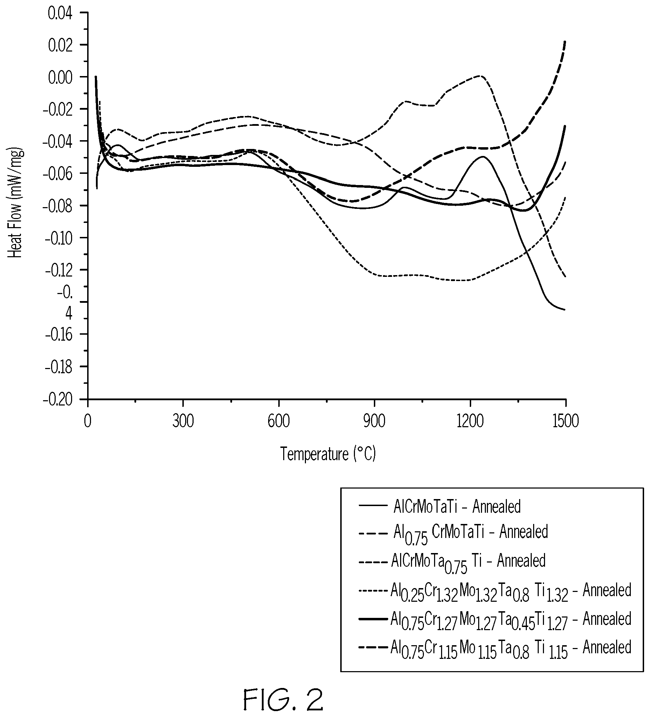

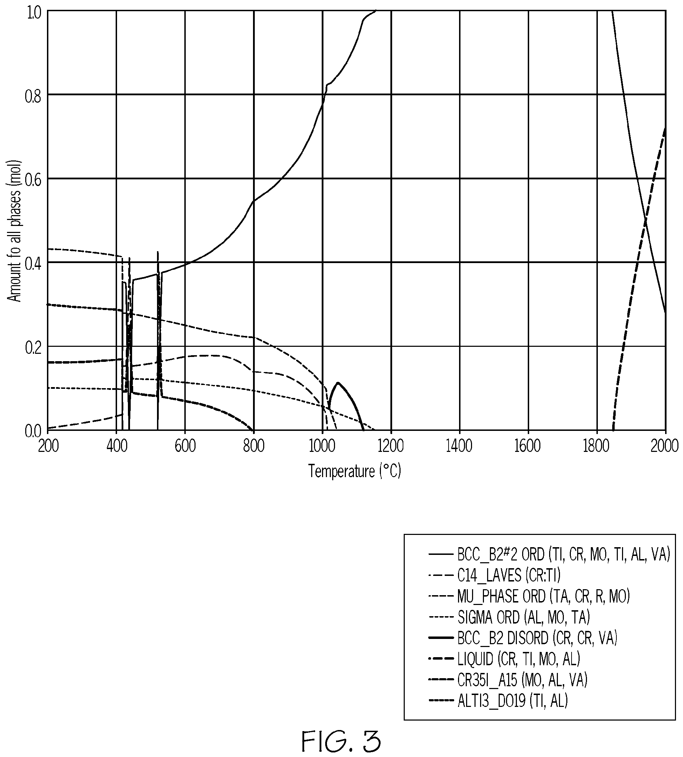

FIG. 2 illustrates thermograms for the various compositions of the refractory complex concentrated alloy 100 disclosed herein. FIGs. 3-10 illustrate various phases present in the various compositions of the refractory complex concentrated alloy 100 disclosed herein. While the refractory complex concentrated alloy 100 is characterized by having a body-centered cubic crystal structure, other crustal structures and phases may be present upon exposure to various temperatures.

Specifically, FIG. 3 is a phase diagram of an Al_{0.75}Cr_{1.27}Mo_{1.27}Ta_{0.45}Ti_{1.27}alloy that has approximately 80% a body-centered cubic crystal structure upon reaching about 1000 °C and approximately 100% a body-centered cubic crystal structure upon reaching about 1200 °C.

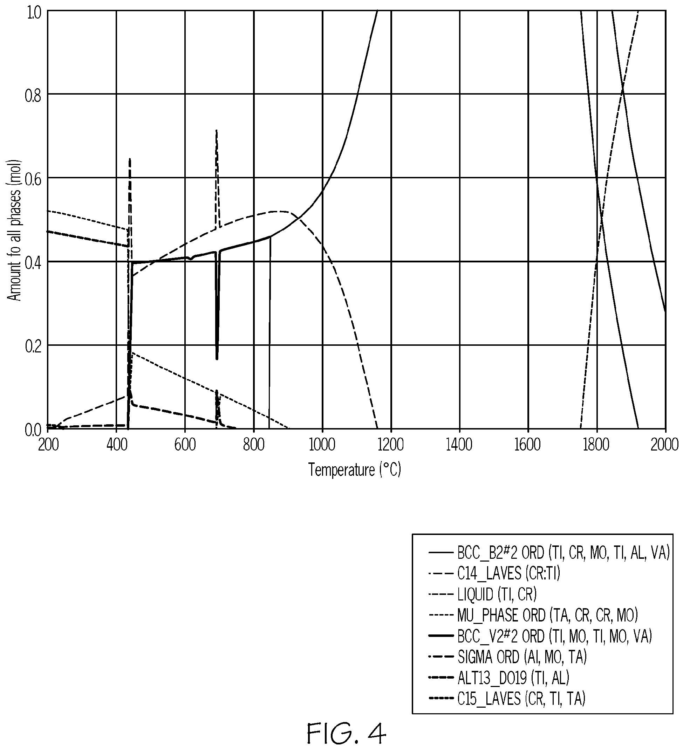

FIG. 4 is a phase diagram of an Al_{0.25}Cr_{1.32}Mo_{1.32}Ta_{0.8}Ti_{1.32} alloy that has approximately 55% a body-centered cubic crystal structure and approximately 45% a laves hexagonal MgZn2 (C14) crystal structure upon reaching about 1000 °C and approximately 100% a body-centered cubic crystal structure upon reaching about 1200 °C.

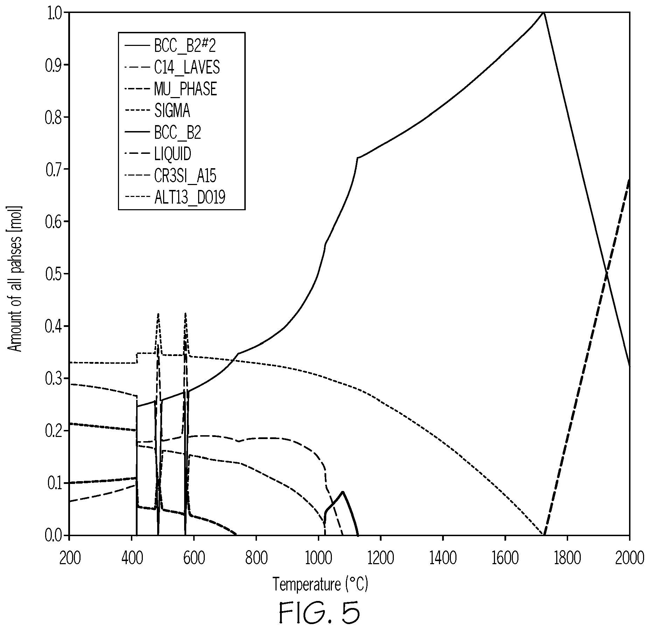

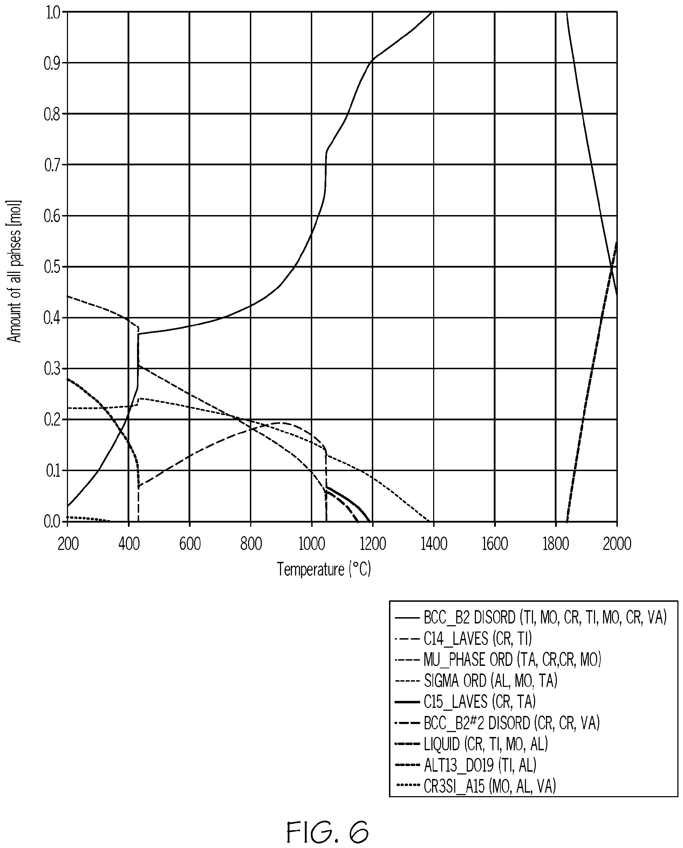

FIG. 5 is a phase diagram of an AlCrMoTaTi alloy. FIG. 6 is a phase diagram of an Al_{0.75}Cr_{1.15}Mo_{1.15}Ta_{0.8}Ti_{1.15} alloy that has approximately 100% a body-centered cubic crystal structure upon reaching about 1400 °C. The Al_{0.75}Cr_{1.15}Mo_{1.15}Ta_{0.8}Ti_{1.15} alloy further exhibits suppressed sigma onset at about 1400 °C.

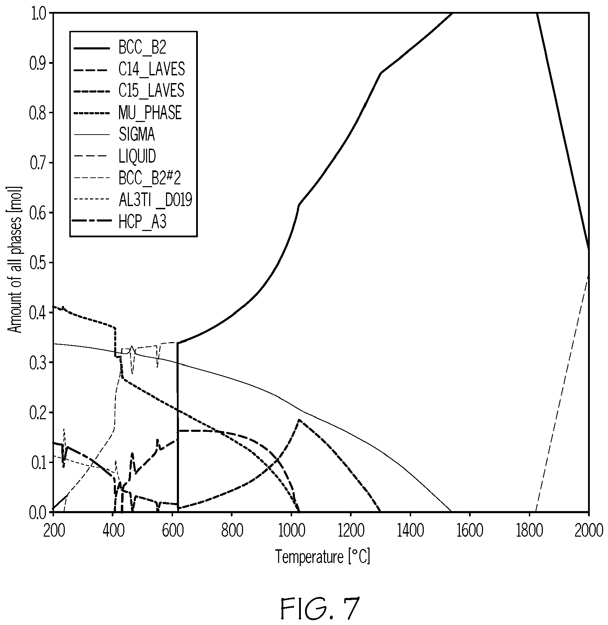

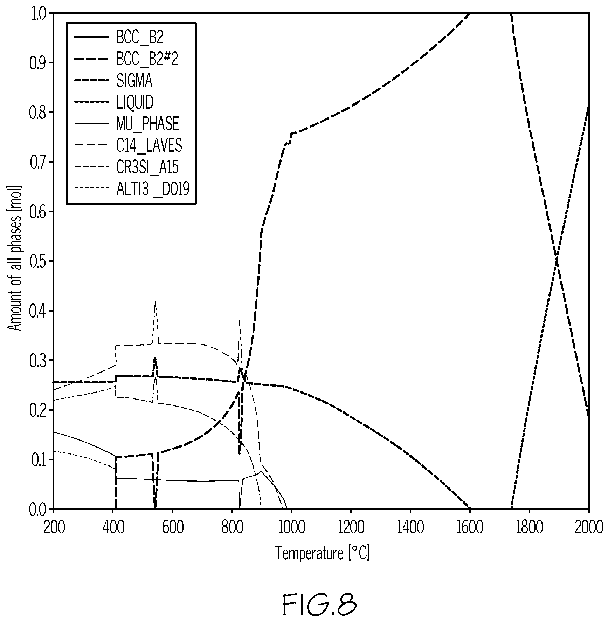

FIG. 7 is a phase diagram of an Al_{0.75}CrMoTaTi alloy having approximately 100% a body-centered cubic crystal structure upon reaching about 1600 °C. FIG. 8 is a phase diagram of an AlCrMoTa_{0.75}Ti alloy having approximately 100% a body-centered cubic crystal structure upon reaching about 1700 °C.

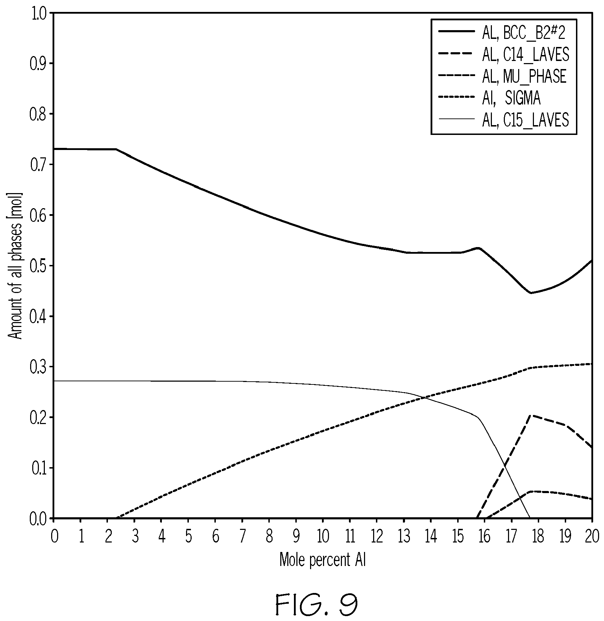

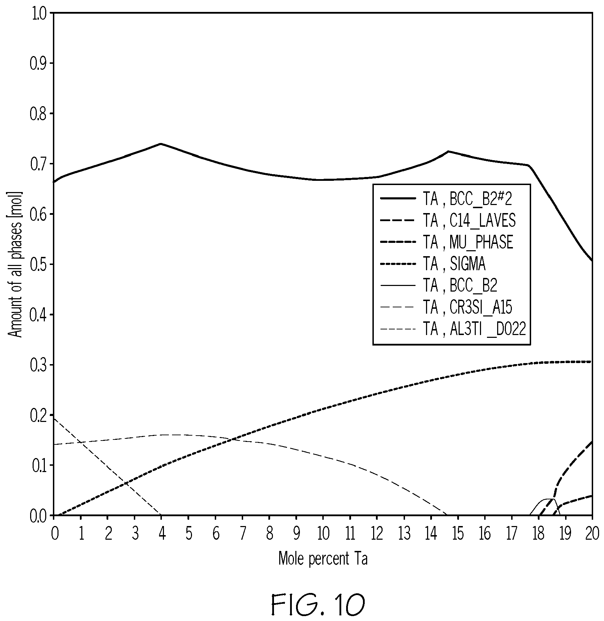

FIG. 9 is a phase diagram of an AlₓCrMoTaTi alloy at 1000 °C having varying phases present based upon the mole percent of Al present in the composition. Similarly, FIG. 10 is a phase diagram of an AlCrMoTa_{y}Ti alloy at 1000 °C having varying phases present based upon the mole percent of Ta present in the composition.

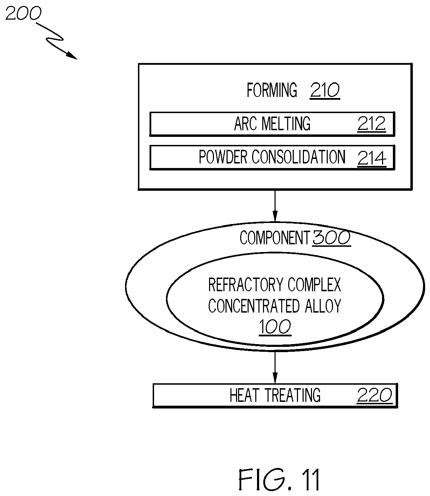

Referring to FIG. 11, in one or more examples, disclosed is a method 200 for manufacturing a component 300 of an aircraft 1102 (FIG. 14). The component comprises a refractory complex concentrated alloy 100 having about 12-22 wt.% chromium (Cr), about 22-35 wt.% molybdenum (Mo); about 15-50 wt.% tantalum (Ta); about 10-20 wt.% titanium (Ti); and aluminum (Al), wherein the refractory complex concentrated alloy is characterized by a matrix phase having a body-centered cubic crystal structure. The method 200 includes the step of forming 210 the component 300 comprising the refractory complex concentrated alloy. In one example, the forming 210 may be performed by arc melting 212, wherein appropriate quantities of materials are charged into a crucible and melted in an electric arc furnace. In another example, the forming 210 may be performed by powder consolidation 214, wherein appropriate quantities of powdered materials are compacted and sintered (e.g., by hot isostatic pressing). Still referring to FIG. 11, in one or more examples, the method 200 further includes the step of heat treating 220 the component 300 after the forming 210 to achieve desired material properties and material crystal structure. In one example, the component 300 is an aerospace article. In another example, the component 300 is an aircraft component.

### EXAMPLES

Samples of the disclosed Al_{0.75}CrMoTaTi, AlCrMoTa_{0.75}Ti, Al_{0.25}Cr_{1.32}Mo_{1.32}Ta_{0.8}Ti_{1.32}, Al_{0.75}Cr_{1.27}Mo_{1.27}Ta_{0.45}Ti_{1.27}, and Al_{0.75}Cr_{1.15}Mo_{1.15}Ta_{0.8}Ti_{1.15} alloys were prepared and assayed. The measured chemistries are presented in Table 1.

**TABLE 1**

| **Alloy** | **AI (wt%)** | **Cr (wt%)** | **Mo (wt%)** | **Ta (wt%)** | **Ti (wt%)** |
|---|---|---|---|---|---|
| Al_{0.75}CrMoTaTi | 4.70 | 13.00 | 24.50 | 44.80 | 13.00 |
| AICrMoTa_{0.75}Ti | 7.60 | 15.10 | 27.00 | 35.70 | 14.60 |
| AI_{0.25}Cr_{1.32}Mo_{1.32}Ta_{0.8}Ti_{1.32} | 2.00 | 16.80 | 29.60 | 35.20 | 16.40 |
| AI_{0.75}Cr_{1.27}Mo_{1.27}Ta_{0.45}Ti_{1.27} | 6.00 | 20.20 | 33.30 | 21.60 | 18.90 |
| AI_{0.75}Cr_{1.15}Mo_{1.15}Ta_{0.8}Ti_{1.15} | 5.60 | 17.00 | 27.80 | 33.60 | 16.00 |

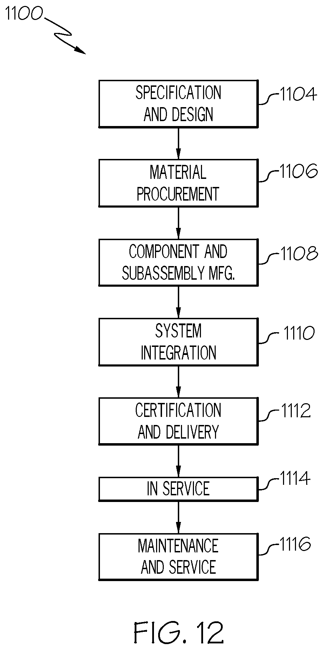

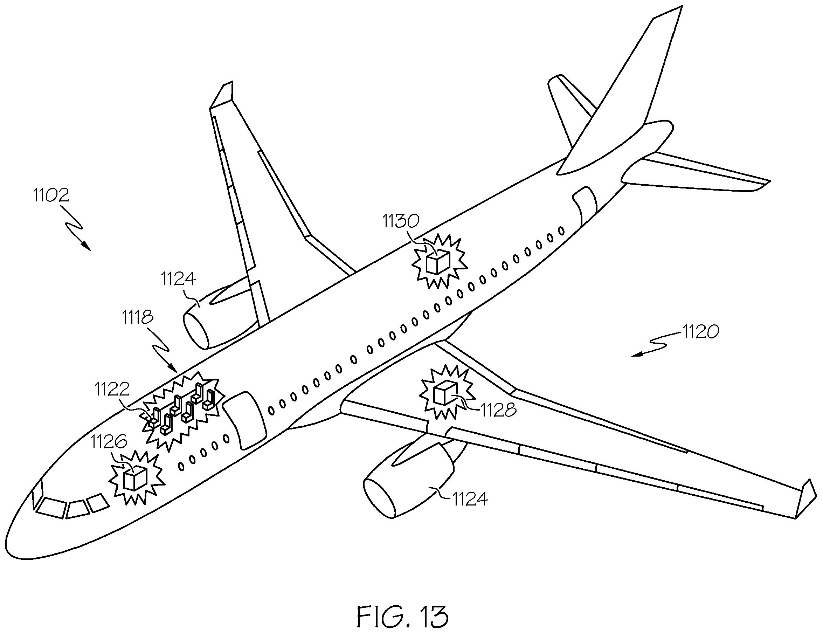

Examples of the present disclosure may be described in the context of aircraft manufacturing and service method 1100 as shown in FIG. 12 and aircraft 1102 as shown in FIG. 13. During pre-production, service method 1100 may include specification and design (block 1104) of aircraft 1102 and material procurement (Block 1106). During production, component and subassembly manufacturing (Block 1108) and system integration (Block 1110) of aircraft 1102 may take place. Thereafter, aircraft 1102 may go through certification and delivery (Block 1112) to be placed in service (Block 1114). While in service, aircraft 1102 may be scheduled for routine maintenance and service (Block 1116). Routine maintenance and service may include modification, reconfiguration, refurbishment, etc. of one or more systems of aircraft 1102.

Each of the processes of service method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in FIG. 13, aircraft 1102 produced by service method 1100 may include airframe 1118 with a plurality of high-level systems 1120 and interior 1122. Examples of high-level systems 1120 include one or more of propulsion system 1124, electrical system 1126, hydraulic system 1128, and environmental system 1130. Any number of other systems may be included. Although an aerospace example is shown, the principles disclosed herein may be applied to other industries, such as the automotive industry. Accordingly, in addition to aircraft 1102, the principles disclosed herein may apply to other vehicles, e.g., land vehicles, marine vehicles, space vehicles, etc.

Refractory complex concentrated alloy(s) and method(s) shown or described herein may be employed during any one or more of the stages of the manufacturing and service method 1100. For example, components or subassemblies corresponding to component and subassembly manufacturing (block 1108) may be fabricated or manufactured in a manner similar to components or subassemblies produced while aircraft 1102 is in service (Block 1114). Also, one or more examples of the refractory complex concentrated alloy(s) and method(s), or combination thereof may be utilized during production stages component and subassembly manufacturing (Block 1108) and system integration (Block 1110), for example, by substantially expediting assembly of or reducing the cost of aircraft 1102. Similarly, one or more examples of the system or method realizations, or a combination thereof, may be utilized, for example and without limitation, while aircraft 1102 is in service (Block 1114) and/or during maintenance and service (Block 1116).

Different examples of the refractory complex concentrated alloy(s) and method(s) disclosed herein include a variety of components, features, and functionalities. It should be understood that the various examples of the refractory complex concentrated alloy(s) and method(s) disclosed herein may include any of the components, features, and functionalities of any of the other examples of the refractory complex concentrated alloy(s) and method(s) disclosed herein in any combination, and all of such possibilities are intended to be within the scope of the present disclosure.

Many modifications of examples set forth herein will come to mind to one skilled in the art to which the present disclosure pertains having the benefit of the teachings presented in the foregoing descriptions and the associated drawings.

Further, the disclosure comprises examples according to the following clauses:
1. A refractory complex concentrated alloy (100) comprising:
   about 12-22 wt.% chromium (Cr);
   about 22-35 wt.% molybdenum (Mo);
   about 15-50 wt.% tantalum (Ta);
   about 10-20 wt.% titanium (Ti); and
   aluminum (Al),
   wherein the refractory complex concentrated alloy is characterized by a matrix phase having a body-centered cubic crystal structure.
2. The refractory complex concentrated alloy (100) of Clause 1, wherein the aluminum (Al) is present at about 1 wt.% to about 10 wt.%.
3. The refractory complex concentrated alloy (100) of Clause 1 or 2, wherein the chromium (Cr) is present at about 13 wt.% to about 21 wt.%.
4. The refractory complex concentrated alloy (100) of any of Clauses 1 to 3, wherein the molybdenum (Mo) is present at about 24 wt.% to about 34 wt.%.
5. The refractory complex concentrated alloy (100) of any of Clauses 1 to 4, wherein the tantalum (Ta) is present at about 20 wt.% to about 45 wt.%.
6. The refractory complex concentrated alloy (100) of any of Clauses 1 to 5, wherein the titanium (Ti) is present at about 12 wt.% to about 19 wt.%.
7. The refractory complex concentrated alloy (100) of any of Clauses 1 to 6, wherein:
   the chromium (Cr) is present at about 12 wt.% to about 16 wt.%;
   the molybdenum (Mo) is present at about 22 wt.% to about 27 wt.%;
   the tantalum (Ta) is present at about 40 wt.% to about 50 wt.%;
   the titanium (Ti) is present at about 10 wt.% to about 16 wt.%; and
   the aluminum (Al) is present at about 2 wt.% to about 8 wt.%.
8. The refractory complex concentrated alloy (100) of any of Clauses 1 to 7, wherein:
   the chromium (Cr) is present at about 12 wt.% to about 14 wt.%;
   the molybdenum (Mo) is present at about 23 wt.% to about 26 wt.%;
   the tantalum (Ta) is present at about 43 wt.% to about 47 wt.%;
   the titanium (Ti) is present at about 12 wt.% to about 14 wt.%; and
   the aluminum (Al) is present at about 3 wt.% to about 6 wt.%.
9. The refractory complex concentrated alloy (100) of any of Clauses 1 to 8, wherein:
   the chromium (Cr) is present at about 12 wt.% to about 20 wt.%;
   the molybdenum (Mo) is present at about 24 wt.% to about 30 wt.%;
   the tantalum (Ta) is present at about 30 wt.% to about 40 wt.%;
   the titanium (Ti) is present at about 12 wt.% to about 18 wt.%; and
   the aluminum (Al) is present at about 4 wt.% to about 10 wt.%.
10. The refractory complex concentrated alloy (100) of any of Clauses 1 to 9, wherein:
   the chromium (Cr) is present at about 13 wt.% to about 18 wt.%;
   the molybdenum (Mo) is present at about 25 wt.% to about 28 wt.%;
   the tantalum (Ta) is present at about 33 wt.% to about 38 wt.%;
   the titanium (Ti) is present at about 13 wt.% to about 17 wt.%; and
   the aluminum (Al) is present at about 6 wt.% to about 9 wt.%.
11. The refractory complex concentrated alloy (100) of any of Clauses 1 to 10, wherein:
   the chromium (Cr) is present at about 13 wt.% to about 21 wt.%;
   the molybdenum (Mo) is present at about 25 wt.% to about 35 wt.%;
   the tantalum (Ta) is present at about 30 wt.% to about 40 wt.%;
   the titanium (Ti) is present at about 12 wt.% to about 18 wt.%; and
   the aluminum (Al) is present at about 1 wt.% to about 5 wt.%.
12. The refractory complex concentrated alloy (100) of any of Clauses 1 to 11, wherein:
   the chromium (Cr) is present at about 14 wt.% to about 19 wt.%;
   the molybdenum (Mo) is present at about 27 wt.% to about 33 wt.%;
   the tantalum (Ta) is present at about 32 wt.% to about 38 wt.%;
   the titanium (Ti) is present at about 14 wt.% to about 18 wt.%; and
   the aluminum (Al) is present at about 1 wt.% to about 4 wt.%.
13. The refractory complex concentrated alloy (100) of any of Clauses 1 to 12, wherein:
   the chromium (Cr) is present at about 15 wt.% to about 22 wt.%;
   the molybdenum (Mo) is present at about 28 wt.% to about 35 wt.%;
   the tantalum (Ta) is present at about 15 wt.% to about 26 wt.%;
   the titanium (Ti) is present at about 15 wt.% to about 20 wt.%; and
   the aluminum (Al) is present at about 2 wt.% to about 10 wt.%.
14. The refractory complex concentrated alloy (100) of any of Clauses 1 to 13, wherein:
   the chromium (Cr) is present at about 18 wt.% to about 22 wt.%;
   the molybdenum (Mo) is present at about 30 wt.% to about 35 wt.%;
   the tantalum (Ta) is present at about 16 wt.% to about 25 wt.%;
   the titanium (Ti) is present at about 16 wt.% to about 20 wt.%; and
   the aluminum (Al) is present at about 3 wt.% to about 9 wt.%.
15. The refractory complex concentrated alloy (100) of any of Clauses 1 to 14, wherein:
   the chromium (Cr) is present at about 14 wt.% to about 20 wt.%;
   the molybdenum (Mo) is present at about 24 wt.% to about 32 wt.%;
   the tantalum (Ta) is present at about 25 wt.% to about 45 wt.%;
   the titanium (Ti) is present at about 11 wt.% to about 19 wt.%; and
   the aluminum (Al) is present at about 2 wt.% to about 9 wt.%.
16. The refractory complex concentrated alloy (100) of any of Clause 1 to 15, wherein:
   the chromium (Cr) is present at about 15 wt.% to about 19 wt.%;
   the molybdenum (Mo) is present at about 25 wt.% to about 30 wt.%;
   the tantalum (Ta) is present at about 30 wt.% to about 35 wt.%;
   the titanium (Ti) is present at about 14 wt.% to about 18 wt.%; and
   the aluminum (Al) is present at about 3 wt.% to about 8 wt.%.
17. The refractory complex concentrated alloy (100) of any of Clauses 1 to 16, wherein the body-centered cubic crystal structure of the matrix phase is achieved upon the refractory complex concentrated alloy being subjected to a temperature of about 1000 °C to about 1500 °C.
18. The refractory complex concentrated alloy (100) of any of Clauses 1 to 17 comprising a room temperature hardness of about 625 to about 750 VHN.
19. An aerospace article formed from the refractory complex concentrated alloy (100) of any of Clauses 1 to 18.
20. An aircraft component (300) comprising the refractory complex concentrated alloy (100) of any of Clauses 1 to 19.
21. A method (200) for manufacturing a component (300) of an aircraft, the component comprising a refractory complex concentrated alloy (100) comprising about 12-22 wt.% chromium (Cr); about 22-35 wt.% molybdenum (Mo); about 15-50 wt.% tantalum (Ta); about 10-20 wt.% titanium (Ti); and aluminum (Al), wherein the refractory complex concentrated alloy (100) is characterized by a matrix phase having a body-centered cubic crystal structure, the method comprising:
   forming (210) the component (300) comprising the refractory complex concentrated alloy (100) by one of arc melting (212) and powder consolidation (214).
22. The method of Clause 21, further comprising heat treating (220) the component (300) after the forming (210).

Therefore, it is to be understood that the present disclosure is not to be limited to the specific examples illustrated and that modifications and other examples are intended to be included within the scope of the appended claims. Moreover, although the foregoing description and the associated drawings describe examples of the present disclosure in the context of certain illustrative combinations of elements and/or functions, it should be appreciated that different combinations of elements and/or functions may be provided by alternative implementations without departing from the scope of the appended claims. Accordingly, parenthetical reference numerals in the appended claims are presented for illustrative purposes only and are not intended to limit the scope of the claimed subject matter to the specific examples provided in the present disclosure.

## Claims

1. A refractory complex concentrated alloy (100) comprising:
about 12-22 wt.% chromium (Cr);
about 22-35 wt.% molybdenum (Mo);
about 15-50 wt.% tantalum (Ta);
about 10-20 wt.% titanium (Ti); and
aluminum (Al),
wherein the refractory complex concentrated alloy is **characterized by** a matrix phase having a body-centered cubic crystal structure.

2. The refractory complex concentrated alloy (100) of Claim 1, wherein the aluminum (Al) is present at about 1 wt.% to about 10 wt.%.

3. The refractory complex concentrated alloy (100) of Claim 1 or 2, wherein the chromium (Cr) is present at about 13 wt.% to about 21 wt.%.

4. The refractory complex concentrated alloy (100) of any of Claims 1 to 3, wherein the molybdenum (Mo) is present at about 24 wt.% to about 34 wt.%.

5. The refractory complex concentrated alloy (100) of any of Claims 1 to 4, wherein the tantalum (Ta) is present at about 20 wt.% to about 45 wt.%.

6. The refractory complex concentrated alloy (100) of any of Claims 1 to 5, wherein the titanium (Ti) is present at about 12 wt.% to about 19 wt.%.

7. The refractory complex concentrated alloy (100) of any of Claims 1 to 6, wherein:
the chromium (Cr) is present at about 12 wt.% to about 16 wt.%;
the molybdenum (Mo) is present at about 22 wt.% to about 27 wt.%;
the tantalum (Ta) is present at about 40 wt.% to about 50 wt.%;
the titanium (Ti) is present at about 10 wt.% to about 16 wt.%; and
the aluminum (Al) is present at about 2 wt.% to about 8 wt.%.

8. The refractory complex concentrated alloy (100) of any of Claims 1 to 7, wherein:
the chromium (Cr) is present at about 12 wt.% to about 14 wt.%;
the molybdenum (Mo) is present at about 23 wt.% to about 26 wt.%;
the tantalum (Ta) is present at about 43 wt.% to about 47 wt.%;
the titanium (Ti) is present at about 12 wt.% to about 14 wt.%; and
the aluminum (Al) is present at about 3 wt.% to about 6 wt.%.

9. The refractory complex concentrated alloy (100) of any of Claims 1 to 8, wherein:
the chromium (Cr) is present at about 12 wt.% to about 20 wt.%;
the molybdenum (Mo) is present at about 24 wt.% to about 30 wt.%;
the tantalum (Ta) is present at about 30 wt.% to about 40 wt.%;
the titanium (Ti) is present at about 12 wt.% to about 18 wt.%; and
the aluminum (Al) is present at about 4 wt.% to about 10 wt.%.

10. The refractory complex concentrated alloy (100) of any of Claims 1 to 9, wherein:
the chromium (Cr) is present at about 13 wt.% to about 18 wt.%;
the molybdenum (Mo) is present at about 25 wt.% to about 28 wt.%;
the tantalum (Ta) is present at about 33 wt.% to about 38 wt.%;
the titanium (Ti) is present at about 13 wt.% to about 17 wt.%; and
the aluminum (Al) is present at about 6 wt.% to about 9 wt.%.

11. The refractory complex concentrated alloy (100) of any of Claims 1 to 10, wherein the body-centered cubic crystal structure of the matrix phase is achieved upon the refractory complex concentrated alloy being subjected to a temperature of about 1000 °C to about 1500 °C.

12. The refractory complex concentrated alloy (100) of any of Claims 1 to 11 comprising a room temperature hardness of about 625 to about 750 VHN.

13. An aerospace article formed from the refractory complex concentrated alloy (100) of any of Claims 1 to 12.

14. An aircraft component (300) comprising the refractory complex concentrated alloy (100) of any of Claims 1 to 13.

15. A method (200) for manufacturing a component (300) of an aircraft, the component comprising a refractory complex concentrated alloy (100) comprising about 12-22 wt.% chromium (Cr); about 22-35 wt.% molybdenum (Mo); about 15-50 wt.% tantalum (Ta); about 10-20 wt.% titanium (Ti); and aluminum (Al), wherein the refractory complex concentrated alloy (100) is **characterized by** a matrix phase having a body-centered cubic crystal structure, the method comprising:
forming (210) the component (300) comprising the refractory complex concentrated alloy (100) by one of arc melting (212) and powder consolidation (214).
